# EUROPÄISCHE PATENTANMELDUNG

(11) **EP 4 850 985 A1**
(43) Veröffentlichungstag der Anmeldung: **09.12.2026**
(21) Anmeldenummer: 26174164.9
(22) Anmeldetag: 23.04.2026
(51) Int. Cl.: B60R 9/10, B60R 9/048

(54) **RADAUFNAHME FÜR EIN RAD EINES ZWEIRADS SOWIE TRÄGERSYSTEM MIT EINEM TRÄGERPROFIL UND MIT EINER DERARTIGEN RADAUFNAHME**

(30) Priorität: 02.06.2025 DE 102025121372
(71) Anmelder: ATERA GmbH, 88299 Leutkirch im Allgäu (DE)
(72) Erfinder: Schmidt, Maximilian, 87764 Legau (DE); Reichel, Johannes, 34289 Zierenberg (DE); Sang, Johannes, 55278 Undenheim (DE)
(74) Vertreter: Patentanwälte Ruff, Wilhelm, Beier, Dauster & Partner mbB

(57) **Zusammenfassung**

Eine Radaufnahme (4) mit einem Radaufnahmekörper (10) zur Montage auf einem Trägerprofil (2) eines Trägersystems und mit einer dem Radaufnahmekörper (10) zugeordneten Fixiereinrichtung zum fixierenden Halten des Rads (6) an dem Radaufnahmekörper (10) ist bekannt. Erfindungsgemäß ist die Fixiereinrichtung zum einseitigen Einhängen in dem Rad (6) ausgebildet. Einsatz für Fahrradträger bei Personenkraftwagen.

## Beschreibung

Die Erfindung betrifft eine Radaufnahme für ein Rad eines Zweirads, insbesondere eines Fahrrads, mit einem Radaufnahmekörper zur Montage auf einem Trägerprofil eines Trägersystems und mit einer dem Radaufnahmekörper zugeordneten Fixiereinrichtung zum fixierenden Halten des Rads an dem Radaufnahmekörper. Die Erfindung betrifft zudem ein Trägersystem mit einem Trägerprofil und mit einer derartigen Radaufnahme.

Die DE 10 2010 015 652 B4 offenbart eine in Form einer Radschale ausgebildete Radaufnahme für ein Fahrradträgersystem, die auf einem Trägerprofil fixierbar ist. Die Radschale weist einen aus Kunststoff hergestellten, einteiligen Radschalenkörper auf, an dessen einer Außenflanke ein Endbereich eines flexiblen Spannbands befestigt ist und an dessen gegenüberliegender Außenflanke eine Spann- und Arretiereinrichtung befestigt ist. Der Radschalenkörper ragt von dem Trägerprofil aus nach oben ab. Zur Fixierung eines Rads eines Fahrrads wird das Spannband oberhalb eines Felgenrings zwischen Speichen des Rads hindurchgeführt und in die Spann- und Arretiereinrichtung eingesteckt. Durch manuelle Spannbewegungen wird das Spannband auf dem Felgenring festgezurrt und zieht so zwangsläufig eine Reifenabrollfläche des Rads gegen einen Stützbereich des Radschalenkörpers.

Aufgabe der Erfindung ist es, eine Radaufnahme und ein Trägersystem der eingangs genannten Art zu schaffen, die eine vereinfachte Montage und Demontage eines Rads ermöglichen.

Diese Aufgabe wird für die Radaufnahme dadurch gelöst, dass die Fixiereinrichtung zum einseitigen Einhängen in dem Rad ausgebildet ist. Dadurch kann eine Bedienperson das Rad an der Radaufnahme befestigen, ohne Handgriffe auf einer der Bedienperson gegenüberliegenden Seite des Rads oder zwischen den Speichen des Rads durchzuführen. Die Bedienperson hängt in einfacher Weise die Fixiereinrichtung von der Bedienerseite aus in das Rad ein. Anschließend wird die Fixiereinrichtung gespannt. Somit ist das Fixieren des Rads von nur einer Seite her möglich. Beim Stand der Technik hingegen wird ein Spannband von der einen Seite her durch die Speichen des Rads hindurchgefädelt und auf der anderen Seite an dem Radaufnahmekörper befestigt. Die erfindungsgemäße Lösung eignet sich in besonders vorteilhafter Weise für Radaufnahmen in Form von Radschalen, die bei Trägersystemen für Fahrräder eingesetzt werden. Der Radaufnahmekörper ist bevorzugt aus Kunststoff hergestellt. Die Radaufnahme und ein entsprechendes Trägersystem sind sowohl bei Fahrradheckträgern als auch bei Fahrraddachträgern einsetzbar, die heck- oder dachseitig an Kraftfahrzeugen montiert werden.

Bei einer Ausführungsform ist die Fixiereinrichtung vor einer Montage getrennt von dem Radaufnahmekörper. Nachdem ein Rad in einem Aufnahmebereich des Radaufnahmekörpers angeordnet ist, wird die Fixiereinrichtung in dem Rad eingehängt und mit dem Radaufnahmekörper verbunden. Diese Ausführungsform hat den Vorteil, dass das Rad zur Anordnung in dem Aufnahmebereich des Radaufnahmekörpers nicht um die Fixiereinrichtung herum manövriert werden muss. In einer anderen Ausführungsform ist die Fixiereinrichtung bereits vor dem Einhängen in das Rad mit dem Radaufnahmekörper verbunden. Diese Ausführungsform hat den Vorteil, dass zum Fixieren des Rads an der Radaufnahme nur wenige Handgriffe notwendig sind. In einer bevorzugten Ausführungsform ist die Radaufnahme als Radschale ausgestaltet. Die Radschale ist in ihrer Form auf das Rad speziell abgestimmt und stützt das Rad dadurch gut. Alternativ hierzu kann ein Stütz- oder Trägerprofil als Radaufnahme fungieren.

In Ausgestaltung der Erfindung umfasst die Fixiereinrichtung einen Hakenabschnitt, der in einer Sicherungsstellung in Bezug auf eine Rotationsachse des Rads zum radialen Hintergreifen eines Wandungsabschnitts einer Felge des Rads ausgebildet und über einen Bandabschnitt mit dem Radaufnahmekörper verbunden ist. Durch den Hakenabschnitt ist die Fixiereinrichtung in universeller Weise für eine Vielzahl von Rädern und Felgen geeignet. Das Rad oder die Felge brauchen keine besonders gestaltete Angriffsfläche für die Fixiereinrichtung aufzuweisen. Gegebenenfalls ist der Hakenabschnitt auf das Rad oder die Felge passend abgestimmt. Über den Bandabschnitt ist in der Sicherungsstellung der Hakenabschnitt in Richtung des Radaufnahmekörpers verspannt, indem der Bandabschnitt eine Zugkraft auf den Hakenabschnitt in Richtung des Radaufnahmekörpers ausübt. Der Bandabschnitt dient dazu, das Rad zwischen dem Hakenabschnitt und dem Radaufnahmekörper einzuspannen und zu fixieren. In vorteilhafter Weise ist der Bandabschnitt als Rastbandabschnitt, Kabelabschnitt oder Textilgurtabschnitt ausgestaltet.

In weiterer Ausgestaltung der Erfindung ist der Hakenabschnitt zum positionsgesicherten Anordnen an dem Wandungsabschnitt der Felge ausgestaltet. Das positionsgesicherte Anordnen verhindert ein Verrutschen oder Verdrehen des Hakenabschnitts auf der Felge. Dadurch ist ein unbeabsichtigtes Nachlassen oder Reduzieren einer über den Hakenabschnitt auf das Rad ausgeübten Spannung oder Spannkraft verhindert. Das Rad ist somit sicher an der Radaufnahme fixiert. Zudem ist eine Beschädigung des Rads oder der Felge vermieden.

In weiterer Ausgestaltung der Erfindung ist in der Sicherungsstellung der Hakenabschnitt zur Einnahme einer Übertotpunktlage relativ zum Wandungsabschnitt eingerichtet, so dass der Hakenabschnitt an dem Wandungsabschnitt unter einer über den Bandabschnitt ausgeübten Spannkraft selbstgesperrt gehalten ist. Aufgrund der Selbstsperrung kann sich der Hakenabschnitt nicht von der Felge lösen oder seine Position relativ zu der Felge verändern, solange eine Spannkraft auf die Felge ausgeübt wird. Erst bei einer ausreichenden Reduzierung der Spannkraft löst sich die Selbstsperrung des Hakenabschnitts, so dass dieser aus der Übertotpunktlage herausbewegt und von der Felge gelöst werden kann.

In weiterer Ausgestaltung der Erfindung weist der Hakenabschnitt erste Kontaktflächen auf, die in der Sicherungsstellung zur Anlage an zwei Kontaktpunkten gegen zugeordnete zweite Kontaktflächen des Wandungsabschnitts ausgestaltet sind, wobei die Spannkraft entlang einer Geraden wirkt, die nicht zwischen den Kontaktpunkten hindurcherstreckt ist. Die über den Bandabschnitt auf den Hakenabschnitt ausgeübte Zug- und Spannkraft greift in einem Verbindungspunkt von Bandabschnitt und Hakenabschnitt an. Die spezielle Anordnung der Kontaktpunkte relativ zueinander und relativ zu dem Angriffspunkt und der Richtung der Zug- und Spannkraft bewirkt, dass der Hakenabschnitt selbstgesperrt an dem Wandungsabschnitt gehalten sein kann. Außerdem ermöglicht diese Anordnung eine vielseitige Gestaltung des Hakenabschnitts und des Bandabschnitts sowie deren Verbindung miteinander. Zudem ist die Radaufnahme für eine Vielzahl von Rädern oder deren Felgen geeignet.

In weiterer Ausgestaltung der Erfindung ist eine den Bandabschnitt aufnehmende und spannende Sicherungseinheit in der Sicherungsstellung zum Verspannen der Felge gegen den Radaufnahmekörper mittels des Hakenabschnitts und des Bandabschnitts vorgesehen. Die Sicherungseinheit ermöglicht in besonders einfacher Weise ein Verbinden des Bandabschnitts mit dem Radaufnahmekörper und ein Ausüben einer Zug- und Spannkraft über den Bandabschnitt auf den Hakenabschnitt. Zudem kann mittels der Sicherungseinheit die Spannkraft an die Größe und spezielle Ausgestaltung des Rads angepasst werden. Zur Demontage des Rads wird mittels der Sicherungseinheit die Spannkraft so weit verringert, dass der Hakenabschnitt von dem Wandungsabschnitt gelöst und das Rad aus der Radaufnahme herausgenommen werden kann.

In weiterer Ausgestaltung der Erfindung weist die Sicherungseinheit eine um eine Schwenkachse schwenkbare Bedieneinheit zur Aufnahme des Bandabschnitts auf, wobei die Schwenkachse in Längsrichtung des Radaufnahmekörpers erstreckt ist, so dass die Sicherungseinheit zur Aufnahme des Bandabschnitts in der Bedieneinheit in wenigstens zwei zueinander gedrehten Richtungen ausgebildet ist. Die Schwenkbarkeit der Bedieneinheit ermöglicht die Anpassung der Fixiereinrichtung an eine Vielzahl von Rädern. Zudem können der Bandabschnitt und der Hakenabschnitt in vielseitiger Weise ausgestaltet sein. Beim Aufbringen der Spannkraft ermöglicht die Schwenkbarkeit ein dynamisches Anpassen der Bedieneinheit an den Bandabschnitt und die wirkende Spannkraft. Der Bandabschnitt kann sich zum Hakenabschnitt und zur Bedieneinheit sowie der dazwischen wirkenden Spannkraft entsprechend den Verbindungspunkten ausrichten. Dadurch wird ein Material des Bandabschnitts geschont. Die Längsrichtung des Radaufnahmekörpers bezieht sich auf den Aufnahmebereich des Radaufnahmekörpers. Insofern erstreckt sich die Längsrichtung im Wesentlichen parallel zu einer Tangentialrichtung eines in dem Aufnahmebereich angeordneten Rads. In einer Ausführungsform ist der Bandabschnitt biegesteif ausgestaltet. Die Bedieneinheit kann dann den Hakenabschnitt über den aufgenommenen Bandabschnitt zwischen die Speichen des Rads und radial innerhalb des Wandungsabschnitts schwenken. Bei dieser Ausführungsform kann der Bandabschnitt dauerhaft mit dem Radaufnahmekörper verbunden sein, wobei gleichzeitig ein Einführungsbereich oberhalb der Radaufnahme zum Einführen des Rads von der Fixiereinrichtung freigehalten werden kann. Bei einer bevorzugten Ausführungsform ist die Bedieneinheit frei schwenkbeweglich ausgestaltet.

In weiterer Ausgestaltung der Erfindung ist die Sicherungseinheit zur manuellen Betätigung ausgebildet, so dass ein Spannen des Bandabschnitts manuell steuerbar ist. Dadurch ist es der Bedienperson möglich, manuell eine gewünschte Spannkraft einzustellen und wieder freizugeben. Zudem gestattet dies eine besonders einfache Konstruktion der Sicherungseinheit.

In weiterer Ausgestaltung der Erfindung ist die Sicherungseinheit zur automatischen Betätigung ausgebildet, so dass ein Spannen des Bandabschnitts automatisch steuerbar ist. Dadurch sind keine Handgriffe der Bedienperson zum Fixieren des Rads in der Radaufnahme notwendig. So erfolgt ein Spannen des Hakenabschnitts gegen den Wandungsabschnitt der Felge bis zu einer Soll-Spannkraft automatisch. Das Spannen kann elektrisch, mechanisch, magnetisch oder auf einer andere Weise erfolgen. Dadurch ist sichergestellt, dass eine für einen sicheren Transport des Zweirads erforderliche Spannkraft auf das Rad ausgeübt wird. Vorteilhaft erfolgt zusätzlich das Einhängen des Hakenabschnitts in den Wandungsabschnitt der Felge automatisch.

In weiterer Ausgestaltung der Erfindung ist die Sicherungseinheit zum automatischen Schwenken des Bandabschnitts um die Schwenkachse ausgebildet. Dadurch verbleibt der Bedienperson lediglich die Aufgabe, das Rad in dem Radaufnahmekörper anzuordnen. Das Fixieren des Rads an dem Radaufnahmekörper umfassend das Einschwenken des Hakenabschnitts zwischen die Speichen, das Einhängen des Hakenabschnitts in die Felge und das Spannen des Hakenabschnitts gegen die Felge und in Richtung des Radaufnahmekörpers erfolgt automatisiert. Es ist der Bedienperson dadurch möglich, das Zweirad während des Fixiervorgangs mit beiden Händen festzuhalten. Um das automatisierte Einschwenken zu ermöglichen, ist der Bandabschnitt bevorzugt biegesteif ausgestaltet oder mit einem Verstärkungselement oder einem Versteifungselement versehen.

In weiterer Ausgestaltung der Erfindung ist eine Erfassungseinrichtung zum Erfassen eines Nachlassens einer Spannung des Bandabschnitts vorgesehen und die Sicherungseinheit ist zum automatischen Nachspannen des Bandabschnitts ausgebildet, wenn die Erfassungseinrichtung ein Nachlassen der Spannung erfasst. Mit der Erfassungseinrichtung ist ein Erfassen eines unbeabsichtigten Nachlassens der Spannung möglich. Wenn die Erfassungseinrichtung das Nachlassen der Spannung erkennt, spannt die Sicherungseinheit den Bandabschnitt oder erhöht die über den Bandabschnitt auf den Hakenabschnitt ausgeübte Spannkraft, so dass das Rad wieder sicher in der Radaufnahme fixiert ist. Dies ist vorteilhaft während einer Fahrt mit einem Kraftfahrzeug bei auf dem Trägersystem montiertem Zweirad. Eine sichere Fixierung des Rads ist dabei sichergestellt, auch wenn der Fahrer ein Nachlassen der Spannung, zum Beispiel aufgrund eines Druckverlusts im Reifen, nicht bemerkt.

In weiterer Ausgestaltung der Erfindung ist der Bandabschnitt als Rastbandabschnitt ausgestaltet und die Sicherungseinheit weist eine Spann- und Arretiereinrichtung zum Spannen und Arretieren des Rastbandabschnitts auf. Diese Ausgestaltung des Bandabschnitts und der Sicherungseinheit ist eine sichere Konstruktion zum Spannen und Arretieren des Bandabschnitts, die mit einfachen Bauteilen realisierbar ist.

In weiterer Ausgestaltung der Erfindung ist der Bandabschnitt einteilig mit dem Hakenabschnitt ausgestaltet. Dies ermöglicht eine einfache Fertigung des Hakenabschnitts und des Bandabschnitts. Außerdem ist bei dieser Ausgestaltung der Hakenabschnitt sicher mit dem Bandabschnitt verbunden. Bevorzugt ist der mit dem Hakenabschnitt einteilige Bandabschnitt als Spritzgussteil hergestellt.

In weiterer Ausgestaltung der Erfindung ist ein Schonerelement zum Kontakt mit der Felge in der Sicherungsstellung vorgesehen. Das Schonerelement ist auf einer oder mehreren Kontaktflächen des Hakenabschnitts angeordnet und verhindert einen direkten Kontakt der Felge mit dem Hakenabschnitt. Dadurch ist eine Beschädigung der Felge durch den Hakenabschnitt, oder umgekehrt, vermieden. Bei einer bevorzugten Ausführungsform erhöht das Schonerelement zusätzlich die Reibung zwischen dem Hakenabschnitt und dem Wandungsabschnitt der Felge, so dass ein Verrutschen des Hakenabschnitts wirkungsvoll vermieden ist.

Für das Trägersystem für ein Kraftfahrzeug mit einem Trägerprofil wird die der Erfindung zugrunde liegende Aufgabe dadurch gelöst, dass das Trägersystem eine erfindungsgemäße Radaufnahme aufweist, die in einem montierten Zustand mittels des Radaufnahmekörpers auf dem Trägerprofil gehalten ist. Vorteilhaft sind zwei erfindungsgemäße Radaufnahmen auf dem Trägerprofil montiert, wobei je eine Radaufnahme einem Rad des Zweirads zugeordnet ist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung einen Teilbereich einer Ausführungsform eines erfindungsgemäßen Trägersystems mit einer Ausführungsform einer erfindungsgemäßen Radaufnahme in einer Freigabestellung,
- Fig. 2: in perspektivischer Darstellung das Trägersystem und die Radaufnahme gemäß Fig. 1 in einer Sicherungsstellung,
- Fig. 3: einen Querschnitt durch die Radaufnahme nach Fig. 2 entlang der Schnittlinie **III-**III in Fig. 2,
- Fig. 4: in perspektivischer Darstellung einen Teilbereich Trägersystems nach Fig. 1 mit einer weiteren Ausführungsform einer erfindungsgemäßen Radaufnahme in der Sicherungsstellung.

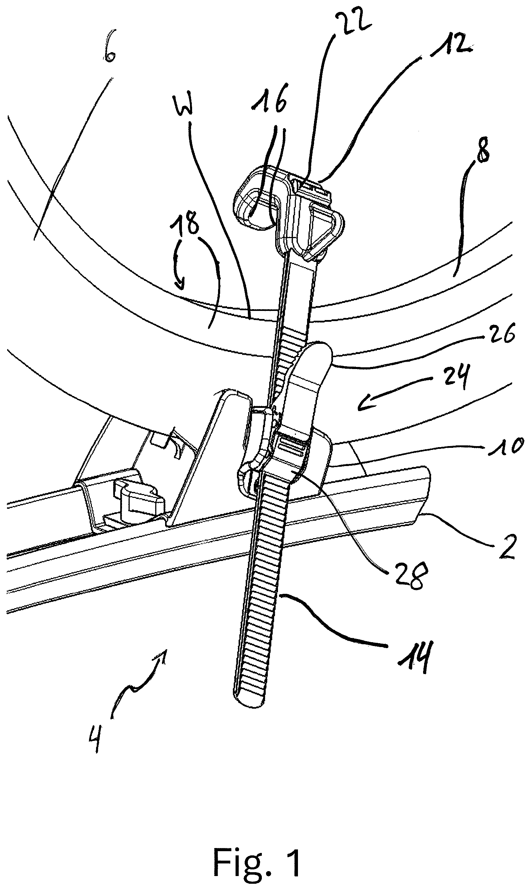

Ein Trägersystem in Form eines Fahrradträgers weist gemäß den Fig. 1 bis 4 ein Trägerprofil 2 auf, das aus Metall, vorliegend aus einer Leichtmetalllegierung, hergestellt ist. Das Trägerprofil 2 ist in montiertem Zustand auf einer Tragstruktur des Fahrradträgers befestigt. Der Fahrradträger selbst ist in fertig montiertem Zustand entweder als Heckträger oder als Dachträger ausgeführt und in einem Heckbereich oder einem Dachbereich eines Kraftfahrzeugs montiert.

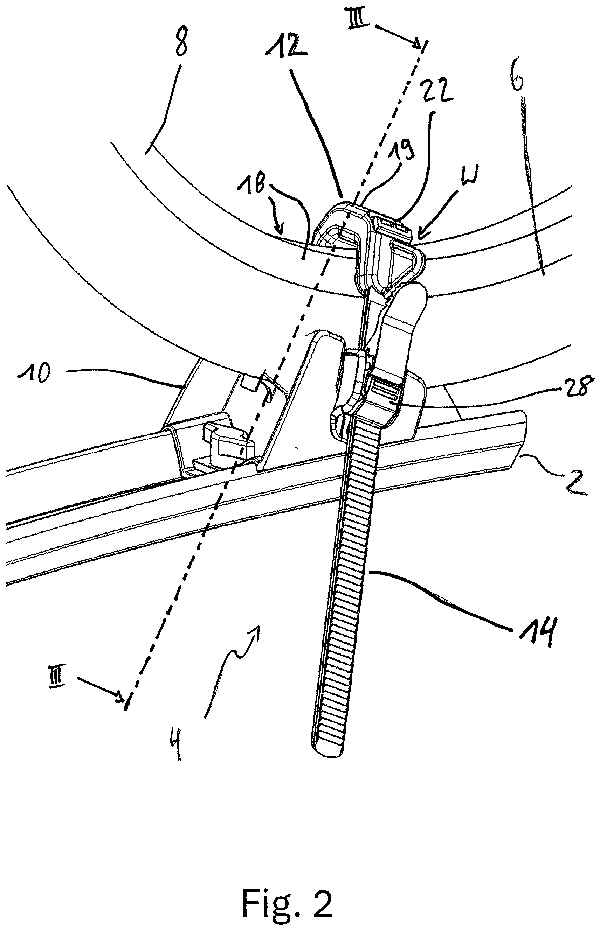

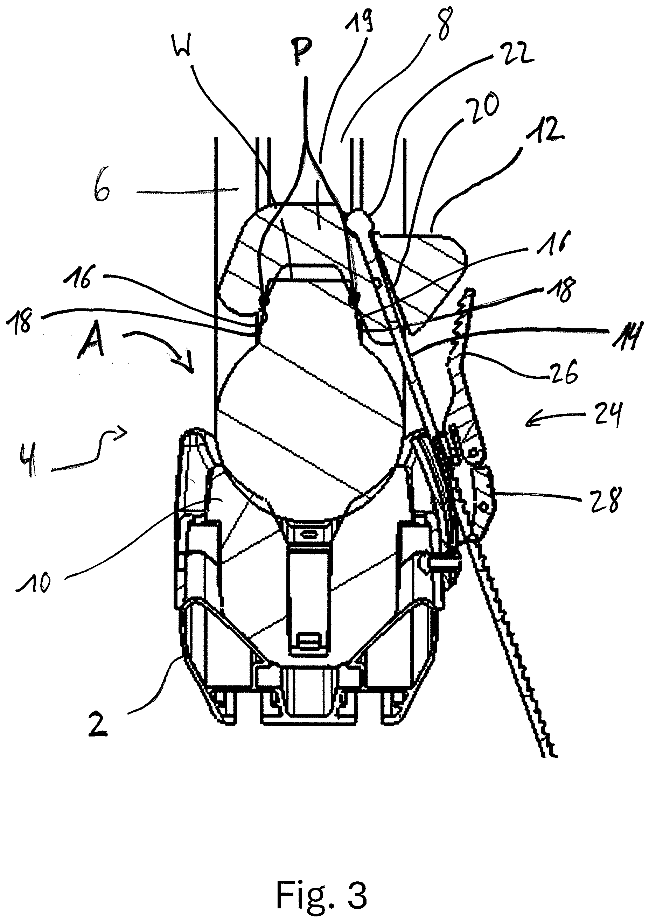

Das Trägerprofil 2 ist als Hohlprofil gestaltet, das im Bereich seiner Oberseite mit einer Rinnen- oder Keilform versehen ist, wie den Fig. 2 und 3 gut zu entnehmen ist. Im Bereich einer Unterseite sind Haltenuten vorgesehen, mittels derer das Trägerprofil 2 auf der Tragstruktur des Fahrradträgers fixierbar ist.

Auf dem Trägerprofil 2 angeordnet ist eine Radaufnahme in Form einer Radschale 4, die zur Fixierung eines Rads 6 eines Fahrrads dient. Das Rad 6 weist einen Reifen sowie eine Felge 8 auf, die mit Drahtspeichen (nicht gezeigt) versehen ist. Das Trägerprofil 2 und die Radschale 4 bilden ein Trägersystem im Sinne der Erfindung.

Die Radschale 4 weist einen als Radschalenkörper 10 gestalteten Radaufnahmekörper auf, der als Kunststoffbauteil gestaltet ist. Der Radschalenkörper 10 weist im Bereich seiner Oberseite einen keilartigen Aufnahmebereich A auf, in dem im montierten Zustand das Rad aufgenommen ist, wie Fig. 3 zu entnehmen ist. Auf seiner Unterseite ist der Radschalenkörper 10 in seiner Form auf das Trägerprofil 2 abgestimmt. Der Radschalenkörper 10 ist entlang einer Längserstreckung des Trägerprofils 2 verschiebbar gelagert. Dabei gleitet der Radschalenkörper 10 in der Keil- oder Rinnenform des Trägerprofils 2. Der Radschalenkörper 10 ist mittels einer Schraube und einer Flügelmutter an dem Trägerprofil in einer gewünschten Position entlang dem Trägerprofil 2 fixierbar.

Die Radschale 4 ist mit einer Fixiereinrichtung versehen, die zur Fixierung des Rads 6 einseitig in das Rad 6 eingehängt wird. Dies erfolgt von einer Bedienerseite her. Die Fixiereinrichtung umfasst einen Hakenabschnitt 12, der von einer Seite des Rads 6 her in Bezug auf eine Rotationsachse des Rads 6 radial innerhalb eines Wandungsabschnitts W der Felge 8 anordenbar ist, wie in Fig. 1 gezeigt. Der Hakenabschnitt 12 ist mit einem Bandabschnitt 14 verbunden, der wiederum zur Befestigung an einer Seitenwange des Radschalenkörpers 10 vorgesehen ist.

Um das Rad 6 in einer Sicherungsstellung an dem Radschalenkörper 10 zu fixieren, wird der Abstand zwischen dem Hakenabschnitt 12 und dem Radschalenkörper 10 verkürzt, bis der Hakenabschnitt 12 mit dem Wandungsabschnitt W der Felge 8 in Kontakt kommt. Der Hakenabschnitt 12 hintergreift den Wandungsabschnitt W radial. Durch Aufbringen einer Zugkraft auf den Hakenabschnitt 12 über den Bandabschnitt 14 in Richtung des Radschalenkörpers 10 verkippt der Hakenabschnitt 12 relativ zu dem Wandungsabschnitt W, bis er an diesem verklemmt. Durch Vergrößern der auf den Hakenabschnitt 12 wirkenden Zugkraft wird das Rad 6 zwischen dem Hakenabschnitt 12 und dem Radschalenkörper 10 eingespannt. In dieser Sicherungsstellung der Fixiereinrichtung ist der Hakenabschnitt 12 an der Felge 8 unter Einwirkung einer Spannkraft selbstgesperrt gehalten. Er befindet sich in einer Übertotpunktlage, aus der der Hakenabschnitt 12 nur wieder herausbewegt werden kann, wenn er zuvor von der auf ihn über den Bandabschnitt 14 ausgeübten Spannkraft befreit wird.

Indem der Hakenabschnitt 12 von der Spannkraft befreit wird, kann er aus seiner an der Felge 8 verklemmten Stellung herausbewegt und bei Vergrößerung des Abstands zwischen dem Hakenabschnitt 12 und dem Radschalenkörper 10 von der Felge 8 radial nach innen wegbewegt werden. In dieser Freigabestellung der Fixiereinrichtung kann das Rad 6 aus dem Aufnahmebereich A herausbewegt und aus der Radschale 4 entnommen werden.

Der Hakenabschnitt 12 ist auf der dem Radschalenkörper 10 zugewandten Seite mit zwei einander zugewandten ersten Kontaktflächen 16 versehen, die in der Sicherungsstellung gegen zugeordnete zweite Kontaktflächen 18 der Felge 8 an zwei Verbindungspunkten P anliegen. Die ersten Kontaktflächen 16 sind zueinander geneigt und entsprechende, die ersten Kontaktflächen 16 aufweisende Teile des Hakenabschnitts 12 über einen Verbindungssteg 19 miteinander verbunden. Der Abstand der ersten Kontaktflächen 16 und ihr Neigungswinkel relativ zum Verbindungssteg 19 sind auf eine Querschnittskontur der Felge 8 abgestimmt, so dass der Hakenabschnitt 12 den Wandungsabschnitt W der Felge 8 hintergreifen und an ihm verklemmen kann.

Der Hakenabschnitt 12 ist einseitig mit einem Aufnahmekanal 20 versehen, in den der Bandabschnitt 14 in einer Einschubrichtung eingeschoben ist. An seinem einen Ende ist der Bandabschnitt 14 mit einem Haltewulst 22 versehen, der ein Herausbewegen des Bandabschnitts 14 aus dem Aufnahmekanal 20 in der Einschubrichtung verhindert. Der Bandabschnitt 14 ist über den Haltewulst 22 an dem Hakenabschnitt gesichert. Bei Ausüben einer Zugkraft auf den Bandabschnitt 14 überträgt der Haltewulst 22 diese Zugkraft auf den Hakenabschnitt 12. Dabei greift die Zugkraft an der Position des Haltewulsts 22 an dem Hakenabschnitt 12 an und ist im Wesentlichen in Richtung der Längserstreckung des Bandabschnitts 14 gerichtet. In der Sicherungsstellung verläuft die Richtung der Zugkraft ausgehend von dem Angriffspunkt einseitig an den beiden Verbindungspunkten P zwischen den ersten und zweiten Kontaktflächen 16, 18 vorbei. Daher bewirkt die Zugkraft ein Verkippen des Hakenabschnitts 12 relativ zu der Felge 8. Dabei verschiebt sich der dem Bandabschnitt 14 nahe Verbindungspunkt P in Zugkraftrichtung auf den Radschalenkörper 10 zu, während der vom Bandabschnitt 14 entfernte Verbindungspunkt P seine Position beibehält oder sich in die entgegengesetzte Richtung verschiebt. Das Verkippen des Hakenabschnitts 12 bewirkt, dass der Hakenabschnitt 12 an der Felge 8 verklemmt. Eine darüber hinaus auf den Hakenabschnitt 12 ausgeübte Zugkraft wirkt als Spannkraft auf die Felge 8. In einer auf ein unbewegliches System übertragenen Analogie des Übertotpunkts befindet sich der Hakenabschnitt 12 in dieser Stellung in einer Übertotpunktlage, in der er durch die über den Bandabschnitt 14 auf den Hakenabschnitt 12 ausgeübten Spannkraft gehalten ist. Die Fixiereinrichtung ähnelt dabei einer Übertotpunktfeder, wobei die auf den Hakenabschnitt 12 ausgeübte Spannkraft einer Federkraft der Übertotpunktfeder entspricht.

Die Fixiereinrichtung umfasst eine Sicherungseinheit 24, die dazu ausgebildet ist, den Bandabschnitt 14 aufzunehmen. Die Sicherungseinheit 24 ist dazu eingerichtet, den Bandabschnitt 14 einzuziehen oder auszuschieben, um einen Abstand zwischen dem Hakenabschnitt 12 und dem Radschalenkörper 10 zu verringern oder zu vergrößern. Sobald der Hakenabschnitt 12 an der Felge 8 verklemmt ist, bewirkt ein weiteres Einziehen des Bandabschnitts 14 in die Sicherungseinheit 24 ein Spannen des Hakenabschnitts 12 gegen den Radschalenkörper 10. In der Sicherungsstellung ist der Bandabschnitt 14 in einer entsprechenden Position in der Sicherungseinheit 24 festgehalten. Durch Lösen der Sicherungseinheit 24 und anschließendes Ausschieben des Bandabschnitts 14 wird die auf den Hakenabschnitt 12 ausgeübte Spannkraft verringert.

Der Bandabschnitt 14 ist als Rastbandabschnitt ausgestaltet und die Sicherungseinheit 24 umfasst eine Spann- und Arretiereinrichtung zum Spannen und Arretieren des Rastbandabschnitts. In der in den Fig. 1 bis 3 dargestellten Ausführungsform ist die Sicherungseinheit 24 als manuell bedienbares Ratschensystem ausgebildet. Durch wiederholtes Betätigen eines Ratschenhebels 26 wird der Rastbandabschnitt 14 sukzessive in die Sicherungseinheit 24 eingezogen. Dabei wird der Rastbandabschnitt 14 durch ein Arretierelement 28 in der Sicherungseinheit 24 arretiert. Durch Drücken und Halten des Ratschenhebels 26 öffnet das Arretierelement 28 und der Rastbandabschnitt 14 kann aus der Sicherungseinheit 24 herausgeschoben werden oder bewegt sich unter Einwirkung einer Spannkraft von selbst aus der Sicherungseinheit 24 heraus. Bei einer nicht gezeigten alternativen Ausführungsform ist das Ratschensystem mit einem als Textilgurt ausgebildeten Bandabschnitt kombiniert. Das Spannen erfolgt dabei durch Aufrollen des Textilgurtabschnitts.

Alternativ zum Ratschensystem kann die Spann- und Arretiereinrichtung in Form eines Clips ohne Ratschenhebel (nicht dargestellt) ausgebildet sein, der zum Arretieren des Bandabschnitts 14 in Form eines Rastbands, eines Kabels oder eines Textilbands ausgebildet ist. Der Bandabschnitt 14 wird auf einer ersten Seite in den Clip eingeführt, so dass der Bandabschnitt 14 auf einer zweiten Seite aus dem Clip hervorsteht. Zum Spannen des Bandabschnitts 14 wird dieser durch Aufbringen einer Zugkraft auf das zweite Ende durch den Clip gezogen. Der Clip umfasst ein Arretierelement, das gegen den Bandabschnitt 14 vorgespannt ist und den Bandabschnitt 14 in dem Clip festlegt.

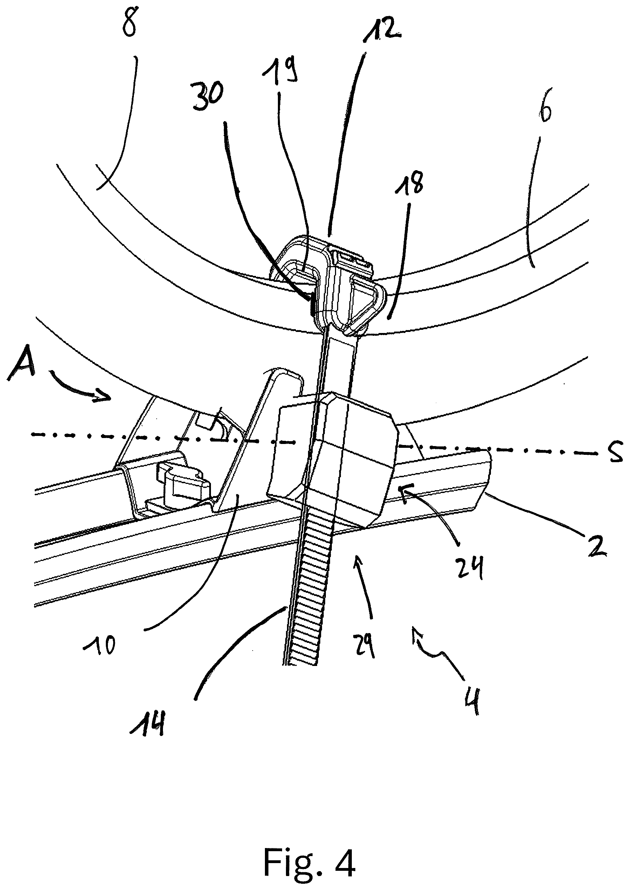

In der Ausführungsform gemäß Fig. 4 ist die Sicherungseinheit 24 in Form eines automatischen Ratschensystems ausgestaltet. Das automatische Ratschensystem erfüllt die gleiche Funktion wie das manuelle Ratschensystem der Ausführungsform gemäß den Fig. 1 bis 3. Das Einziehen und Ausschieben des Bandabschnitts 14 sowie das Arretieren und Lösen erfolgen dabei automatisch. Das automatische Ratschensystem ist vorteilhaft mit einer Steuerungseinrichtung verbunden, über welche die Funktionen des automatischen Ratschensystems gesteuert werden.

Die Sicherungseinheit 24 weist eine Bandaufnahmeeinheit 29 zur Aufnahme des Bandabschnitts 14 auf. Die Bandaufnahmeeinheit 29 ist um eine Schwenkachse S schwenkbar gelagert, wobei die Schwenkachse S in Längsrichtung des Radschalenkörpers 4 erstreckt ist. Die Bandaufnahmeeinheit 29 ist zwischen wenigstens zwei zueinander gedrehten Ausrichtungen oder frei drehbeweglich. Dadurch ist es möglich, dass der Bandabschnitt 14 in der Bandaufnahmeeinheit 29 in wenigstens zwei Ausrichtungen relativ zu dem Radschalenkörper 10 aufgenommen werden kann.

Das in Fig. 4 gezeigte automatische Ratschensystem ist zum automatischen Verschwenken der Bandaufnahmeeinheit 29 ausgebildet. Bei in der Bandaufnahmeeinheit 29 aufgenommenem Bandabschnitt 14 ist das automatische Ratschensystem somit zum automatischen Verschwenken des Bandabschnitts 14 samt dem Hakenabschnitt 12 ausgebildet. Bei von dem Rad 6 weggeschwenktem Hakenabschnitt 12 und Bandabschnitt 14 ist ein Einführungsbereich oberhalb des Radschalenkörpers 10 frei. Das Rad 6 kann dann problemlos in dem Aufnahmebereich A des Radschalenkörpers 10 angeordnet werden. Anschließend schwenkt die Bandaufnahmeeinheit 29 den Bandabschnitt 14 samt Hakenabschnitt 12 zwischen die Speichen des Rads 6. Nach einem Einziehen des Bandabschnitts 14 spannt die Sicherungseinheit 24 den Hakenabschnitt 12 gegen die Felge 8. In gleicher Weise kann die Ausführungsform nach den Fig. 1 bis 3 mit einer schwenkbaren Bandaufnahmeeinheit versehen sein. Das Verschwenken der Bandaufnahmeeinheit erfolgt dann durch manuelle Betätigung.

Die Radschale 4 gemäß Fig. 4 ist mit einer Erfassungseinrichtung (nicht gezeigt) versehen, die zum Erfassen eines Nachlassens einer Spannung des Bandabschnitts 14 eingerichtet ist. Hierzu kann sie eine auf den Hakenabschnitt 12 ausgeübte Spannkraft erfassen. Wenn die erfasste Spannkraft unter einen voreingestellten Schwellwert sinkt, wird ein Nachlassen der Spannung des Bandabschnitts 14 erkannt. Das automatische Ratschensystem spannt den Bandabschnitt 14 dann nach, um eine sichere Fixierung des Rads 6 wiederherzustellen.

In den gezeigten Ausführungsformen sind der Hakenabschnitt 12 und der Bandabschnitt 14 als separate Komponenten ausgebildet. Erfindungsgemäß ist es auch denkbar, dass ein Hakenabschnitt und ein Bandabschnitt als einteilige Komponente ausgebildet sind, welche die Funktionen sowohl des Hakenabschnitts 12 als auch des Bandabschnitts 14 gemäß den gezeigten Ausführungsformen erfüllt.

Der Hakenabschnitt 12 gemäß der in Fig. 4 gezeigten Ausführungsform ist an den ersten Kontaktflächen 16 jeweils mit einem Schonerelement 30 versehen. In der Sicherungsstellung ist das Schonerelement 30 zwischen dem Hakenabschnitt 12 und der Felge 8, konkret zwischen den ersten und den zweiten Kontaktflächen 16, 18, angeordnet und verhindert einen direkten Kontakt.

## Patentansprüche

1. Radaufnahme (4) für ein Rad (6) eines Zweirads, insbesondere eines Fahrrads, mit einem Radaufnahmekörper (10) zur Montage auf einem Trägerprofil (2) eines Trägersystems und mit einer dem Radaufnahmekörper (10) zugeordneten Fixiereinrichtung zum fixierenden Halten des Rads (6) an dem Radaufnahmekörper (10), **dadurch gekennzeichnet, dass** die Fixiereinrichtung zum einseitigen Einhängen in dem Rad (6) ausgebildet ist.

2. Radaufnahme (4) nach Anspruch 1, **dadurch gekennzeichnet, dass** die Fixiereinrichtung einen Hakenabschnitt (12) umfasst, der in einer Sicherungsstellung in Bezug auf eine Rotationsachse des Rads (6) zum radialen Hintergreifen eines Wandungsabschnitts (W) einer Felge (8) des Rads (6) ausgebildet und über einen Bandabschnitt (14) mit dem Radaufnahmekörper (10) verbunden ist.

3. Radaufnahme (4) nach Anspruch 2, **dadurch gekennzeichnet, dass** der Hakenabschnitt (12) zum positionsgesicherten Anordnen an dem Wandungsabschnitt der Felge (8) ausgestaltet ist.

4. Radaufnahme (4) nach Anspruch 3, **dadurch gekennzeichnet, dass** in der Sicherungsstellung der Hakenabschnitt (12) zur Einnahme einer Übertotpunktlage relativ zum Wandungsabschnitt eingerichtet ist, so dass der Hakenabschnitt (12) an dem Wandungsabschnitt unter einer über den Bandabschnitt (14) ausgeübten Spannkraft selbstgesperrt gehalten ist.

5. Radaufnahme (4) nach Anspruch 4, **dadurch gekennzeichnet, dass** der Hakenabschnitt (12) erste Kontaktflächen (16) aufweist, die in der Sicherungsstellung zur Anlage an zwei Kontaktpunkten (P) gegen zugeordnete zweite Kontaktflächen (18) des Wandungsabschnitts (W) ausgestaltet sind, wobei die die Spannkraft entlang einer Geraden wirkt, die nicht zwischen den Kontaktpunkten (P) hindurcherstreckt ist.

6. Radaufnahme (4) nach einem der Ansprüche 2 bis 5, **dadurch gekennzeichnet, dass** eine den Bandabschnitt (14) aufnehmende und spannende Sicherungseinheit (24) in der Sicherungsstellung zum Verspannen der Felge (8) gegen den Radaufnahmekörper (10) mittels des Hakenabschnitts (12) und des Bandabschnitts (14) vorgesehen ist.

7. Radaufnahme (4) nach Anspruch 6, **dadurch gekennzeichnet, dass** die Sicherungseinheit (24) eine um eine Schwenkachse (S) schwenkbare Bandaufnahmeeinheit (29) zur Aufnahme des Bandabschnitts (14) aufweist, wobei die Schwenkachse (S) in Längsrichtung des Radaufnahmekörpers (10) erstreckt ist, so dass die Sicherungseinheit (24) zur Aufnahme des Bandabschnitts (14) in der Bandaufnahmeeinheit (29) in wenigstens zwei zueinander gedrehten Richtungen ausgebildet ist.

8. Radaufnahme (4) nach Anspruch 6 oder 7, **dadurch gekennzeichnet, dass** die Sicherungseinheit (24) zur manuellen Betätigung ausgebildet ist, so dass ein Spannen des Bandabschnitts (14) manuell steuerbar ist.

9. Radaufnahme (4) nach Anspruch 6 oder 7, **dadurch gekennzeichnet, dass** die Sicherungseinheit (24) zur automatischen Betätigung ausgebildet ist, so dass ein Spannen des Bandabschnitts (14) automatisch steuerbar ist.

10. Radaufnahme (4) nach Anspruch 9, **dadurch gekennzeichnet, dass** die Sicherungseinheit (24) zum automatischen Schwenken des Bandabschnitts (14) um die Schwenkachse (S) ausgebildet ist.

11. Radaufnahme (4) nach Anspruch 10, **dadurch gekennzeichnet, dass** eine Erfassungseinrichtung zum Erfassen eines Nachlassens einer Spannung des Bandabschnitts (14) vorgesehen ist und dass die Sicherungseinheit (24) zum automatischen Nachspannen des Bandabschnitts (14) ausgebildet ist, wenn die Erfassungseinrichtung ein Nachlassen der Spannung erfasst.

12. Radaufnahme (4) nach einem der Ansprüche 6 bis 11, **dadurch gekennzeichnet, dass** der Bandabschnitt (14) als Rastbandabschnitt ausgebildet ist und dass die Sicherungseinheit (24) eine Spann- und Arretiereinrichtung zum Spannen und Arretieren des Rastbandabschnitts aufweist.

13. Radaufnahme (4) nach einem der Ansprüche 2 bis 12, **dadurch gekennzeichnet, dass** der Bandabschnitt (14) einteilig mit dem Hakenabschnitt (12) gestaltet ist.

14. Radaufnahme (4) nach einem der Ansprüche 2 bis 13, **dadurch gekennzeichnet, dass** ein Schonerelement (30) zum Kontakt mit der Felge (8) in der Sicherungsstellung vorgesehen ist.

15. Trägersystem für ein Kraftfahrzeug mit einem Trägerprofil (2) und einer Radaufnahme (4) nach einem der vorhergehenden Ansprüche, die in einem montierten Zustand mittels des Radaufnahmekörpers (10) auf dem Trägerprofil (2) gehalten ist.
